(19) Europäisches Patentamt
European Patent Office
Office européen des brevets

(11) **EP 3 217 190 A1**

(12) **EUROPEAN PATENT APPLICATION**

(43) Date of publication:
**13.09.2017 Bulletin 2017/37**

(51) Int Cl.:
**G01S 17/10** (2006.01)   **G01S 17/42** (2006.01)
**G01S 7/481** (2006.01)   **G01S 7/484** (2006.01)

(21) Application number: **17158773.6**

(22) Date of filing: **01.03.2017**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority: **08.03.2016 JP 2016044389**

(71) Applicant: **Fujitsu Limited**
**Kanagawa 211-8588 (JP)**

(72) Inventor: **AKIYAMA, Suguru**
**Kawasaki-shi, Kanagawa 211-8588 (JP)**

(74) Representative: **Hutchison, James**
**Haseltine Lake LLP**
**300 High Holborn**
**London, Greater London WC1V 7JH (GB)**

(54) **OPTICAL DISTANCE MEASURING SYSTEM AND LIGHT RANGING METHOD**

(57)   An optical distance measuring system includes a multi-wavelength pulse light source configured to generate a plurality of light pulses of different wavelengths and repeat a cycle in which the light pulse is generated while sequentially changing the wavelength thereof; a scan device configured to scan the light pulses; a wavelength-selectable light receiver configured to receive reflection light of the plurality of light pulses of difference wavelengths from a target and generate a light receiving signal that corresponds to each of the plurality of different wavelengths; and a processor configured to detect time from the generation of each of the plurality of light pulses of different wavelengths in the multi-wavelength pulse light source to the generation of the light receiving signal of a corresponding wavelength which is generated in predetermined time and calculate a distance to the target in a scanning direction from the detected time.

FIG. 3

## Description

FIELD

The embodiments discussed herein are related to an optical distance measuring system or a light ranging system and an optical distance measuring method or a light ranging method.

BACKGROUND

A distance to an object in a specific direction may be found by measuring a time as a time of flight (TOF) which it takes for a light pulse in beam form emitted in the direction to be scattered by an object and then return. The light pulse in a beam form will be hereinafter referred to as a light pulse beam. A three-dimensional distance image (depth image) may be acquired by performing scanning in which the direction in which the light pulse beam is emitted is successively continuously changed, that is, by repeating such distance measuring while changing the direction in which the distance is measured. In general, a laser is used as a light source in this case, and therefore, a system that acquires such a three-dimensional distance image is referred to as a laser ranging system or a laser distance measuring system in general. The laser ranging system is also used for a laser radar device.

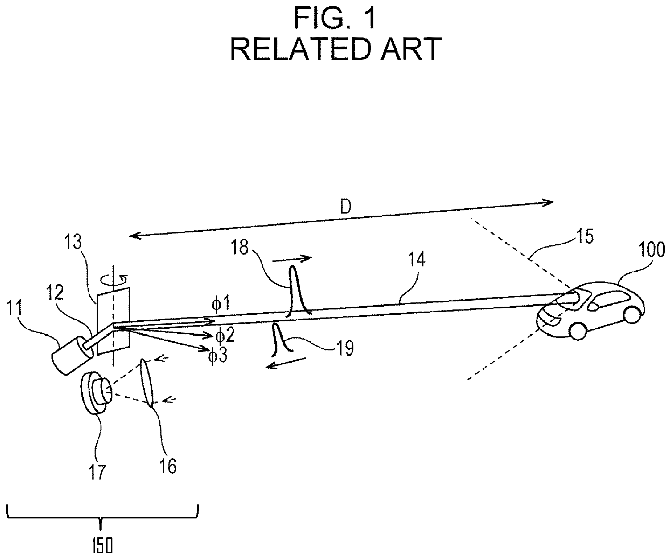

FIG. 1 is a view illustrating a general laser ranging system.

A pulse light source 11 emits a light pulse 12 in beam form. The pulse light source 11 is a light source, such as, for example, a semiconductor laser or the like, which may be modulated at high speed, and the light pulse will be hereinafter occasionally referred to as a laser pulse or a laser pulse beam. The light pulse is scanned by a scan device 13 such that an emission direction thereof is changed. The scan device 13 is realized, for example, by a scanning mirror or the like. Scanning is performed one-dimensionally or two-dimensionally. The scanning mirror is realized, for example, by a microelectromechanical systems (MEMS) mirror.

Light pulses are generated at intervals so as to be emitted from the scan device 13 at equal angular intervals and each of the light pulses is emitted in a direction set at that point in time. In FIG. 1, the light pulse is emitted in each of emission directions such as φ1, φ2, and φ3. In other words, the light pulse is scanned by the scan device 13. There is also a case where the scan device 13 not only one-dimensionally scans the light pulse in a certain direction, for example, the horizontal direction in FIG. 1, but also two-dimensionally scans the light pulse further in another direction.

As illustrated in FIG. 1, a light pulse 18 of a beam 14 emitted from the scan device 13 in the direction φ1 is scattered by an object 100 as a target that exists in the direction φ1. In this way, a scattered light pulse 15 is generated. A echo 19 as a part of the scattered light pulse 15 enters a condenser lens 16 provided in the vicinity of the scan device 13 to be condensed, and then the condensed echo 19 enters a light receiving element 17. The echo 19 received by the light receiving element 17 is transformed to a light receiving signal in pulse form corresponding to the echo 19. In the following description, it is assumed that the pulse light source 11, the scan device 13, the condenser lens 16, and the light receiving element 17 are accommodated in a single optical distance measuring system 150 such as a device. Furthermore, a distance in the device is assumed to be small enough to be ignored, as compared to a distance from the device to the target.

Time from the generation of a light pulse to the generation of a light receiving signal is represented by a value obtained by dividing the double of a distance D from an optical distance measuring device 150 including the pulse light source 11 and the light receiving element 17 to the target 100 by the speed of light. Therefore, time T1 as a time of flight (TOF) from the emission of the light pulse to the reception of the returning light pulse is measured and the distance D to the target 100 in the direction φ1 is measured in accordance with the following expression.

$$D = (T1 \times c)/2,$$

where c is the light speed.

Next, for measuring the distance to a target in another direction φ2, the mirror is deflected to emit a light pulse in the direction φ2 and thereby the distance to the target in the direction φ2 is measured from the TOF T2 in a similar manner described above. TOF of light pulse for each direction is measured while deflecting the mirror, and thus, a distance image at an angle of view, which corresponds to a swinging width of the mirror, is finally acquired. Therefore, a light receiving unit including the condenser lens 16 and the light receiving element 17 achieves a wide-angle light receiving range in which a light pulse reflected by the target in a scanning range may be received.

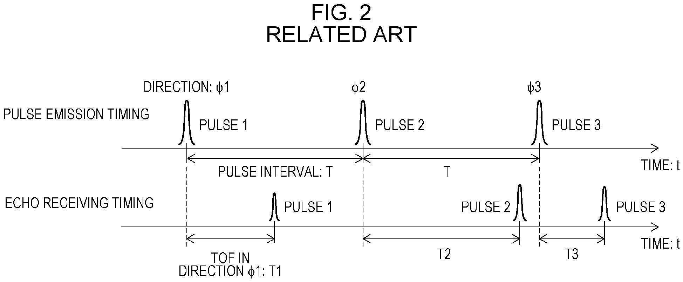

FIG. 2 is a time chart illustrating a light pulse emission timing and a light receiving timing in the general optical distance measuring system 150 illustrated in FIG. 1.

As illustrated in FIG. 2, when the emission directions in which each of the light pulses is emitted by the scan device 13 are φ1, φ2, and φ3, a light pulses 1, 2, and 3 are generated. When the emission direction is the direction φ1, an echo of the light pulse 1 is received at TOF = T1, when the emission direction is the direction φ2, an echo of the light pulse 2 is received at TOF = T2 and, when the emission direction is the direction φ3, an echo of the light pulse 3 is received at TOF = T3. The distance to the target in each of the directions φ1, φ2, and φ3 is calculated from the corresponding one of the values of T1, T2, and T3.

In the optical distance measuring system, a maximum measurable distance to a target to be detected is determined in advance and will be referred to as a detection distance range Dmax. TOF when a target is located at the distance Dmax from an optical distance measuring device is 2Dmax/c. In order to distinguish two echos caused by adjacent two light pulses continuously emitted, a light pulse as a later one in the adjacent two lights is needed to be emitted at least after longer time than the TOF from the time at which the precedent light pulse has emitted. The following condition is therefore imposed on a light pulse interval T for a light pulse emission timing in the time chart of FIG. 2.

$$T > 2 \times Dmax/c$$

In other words, the time T is needed at least for distance measuring for a single direction. When Dmax = 30 m, the time T is 200 ns. In this case, in acquiring a distance image at a Video Graphic Array (VGA) resolution ($640 \times 480$ pixels), it takes time of 61 msec to acquire one frame, and the frame rate is 16.3 frames/sec (fps). This frame rate is not high enough to acquire a distance image of an object that moves fast such that the object looks smoothly moving. Therefore, when the above-described optical distance measuring system served as a laser radar generates two-dimensional distance image, it is difficult to acquire a distance image at a higher frame rate than a limit value determined by TOF per direction and measurement points per frame.

Japanese Laid-open Patent Publication No. 2008-292308, Japanese Laid-open Patent Publication No. 2000-35479, and Japanese Laid-open Patent Publication No. 2003-149338 discuss prior art.

SUMMARY

The present invention is defined by the appended independent claims, to which reference should now be made. Specific embodiments are defined in the dependent claims. Accordingly, it is an embodiment of one aspect of the invention to provide an optical distance measuring system that generates a distance image at a high frame rate.

According to an embodiment of one aspect of the invention, an optical distance measuring system includes a multi-wavelength pulse light source configured to generate a plurality of light pulses of different wavelengths and repeat a cycle in which the light pulse is generated while sequentially changing the wavelength thereof; a scan device configured to scan the light pulses; a wavelength-selectable light receiver configured to receive reflection light of the plurality of light pulses of difference wavelengths from a target and generate a light receiving signal that corresponds to each of the plurality of different wavelengths; and a processor configured to detect time from the generation of each of the plurality of light pulses of different wavelengths in the multi-wavelength pulse light source to the generation of the light receiving signal of a corresponding wavelength which is generated in predetermined time and calculate a distance to the target in a scanning direction from the detected time.

The advantages of the invention will be realized and attained by means of the elements and combinations particularly pointed out in the claims.

It is to be understood that both the foregoing general description and the following detailed description are exemplary and explanatory and are not restrictive of the invention, as claimed.

BRIEF DESCRIPTION OF DRAWINGS

Embodiments of the invention are set out, by way of example only, with reference to the following drawings, in which:

FIG. 1 is a view illustrating a general laser ranging system;
FIG. 2 is a time chart illustrating a light pulse emission timing and a light receiving timing in the general optical distance measuring system illustrated in FIG. 1;
FIG. 3 is a diagram illustrating an overview configuration of an optical distance measuring system according to a first embodiment;
FIG. 4 is a time chart illustrating a light pulse emission timing and a light receiving timing in the optical distance measuring system according to the first embodiment; and
FIG. 5 is a diagram illustrating a configuration a laser distance measuring device according to a second embodiment.

DESCRIPTION OF EMBODIMENTS

It is desired to provide an optical distance measuring system that generates a distance image at a high frame rate.

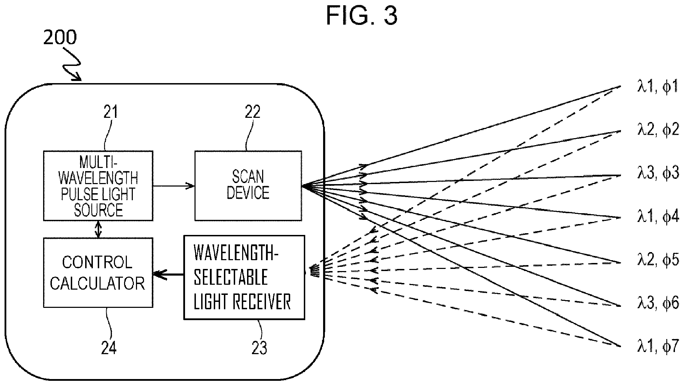

FIG. 3 is a diagram illustrating an overview configuration of an optical distance measuring system 200 according to a first embodiment.

The optical distance measuring system 200 includes a multi-wavelength pulse light source 21, a scan device 22, a wavelength-selectable light receiver 23, and a control calculator 24.

The multi-wavelength pulse light source 21 generates a plurality of light pulses of different wavelengths in beam form and repeats a cycle in which a light pulse is generated while sequentially changing the wavelength of the light pulse. In the optical distance measuring system 200 according to the first embodiment, the multi-wavelength pulse light source 21 is desired to generate a light pulse having a pulse width of several ns or less in a cycle of several tens ns. The multi-wavelength pulse light source 21, therefore, is realized by a semiconductor laser. Also, the multi-wavelength pulse light source 21 generates light pulses of different wavelengths, and therefore, for example, a wavelength variable laser may be used. However, the multi-wavelength pulse light source 21 is not limited thereto, the multi-wavelength pulse light source 21 may include a plurality of semiconductor lasers of different wavelengths to combine outputs of the plurality of semiconductor lasers together and be thus realized. A light pulse output by the multi-wavelength pulse light source 21 will be hereinafter referred to as a light pulse beam. Also, it is assumed herein that the multi-wavelength pulse light source 21 generates light pulse beams of three wavelengths $\lambda1$, $\lambda2$, and $\lambda3$ in the above-described cycle.

The scan device 22 emits successively light pulse beams incident from the multi-wavelength pulse light source 21 while changing an emission direction, that is, performs scanning using the light pulse beam. The scan device 22 is realized, for example, by a scanning mirror or the like, and performs two-dimensional scanning in this case, but may perform one-dimensional scanning. In consideration of the frame rate of a distance image, the scanning mirror is preferably realized by a microelectromechanical systems (MEMS) mirror, but may be realized, for example, by a multi-planar high-speed rotating polygon mirror.

As illustrated in FIG. 3, a light pulse beam is generated so that the light pulse beam emitted from the scan device 22 is emitted in each of emission directions $\varphi1$, $\varphi2$, $\varphi3$, $\varphi4$, ···. In other words, the light pulse beam is emitted in each of the directions $\varphi1$, $\varphi2$, $\varphi3$, $\varphi4$, ···. As described above, light pulse beams of thee wavelengths $\lambda1$, $\lambda2$, and $\lambda3$ are generated in a cycle, and therefore, when the emission direction is $\varphi1$, a light pulse beam of a wavelength $\lambda1$ is emitted, when the emission direction is $\varphi2$, a light pulse beam of a wavelength $\lambda2$ is emitted, ..., and when the emission direction is $\varphi6$, a light pulse beam of a wavelength $\lambda3$ is emitted. In FIG. 3, an emitted light pulse beam is indicated by a solid line and an echo of a light pulse beam that is scatted or diffused by a target and enters the wavelength-selectable light receiver 23 is indicated by a dashed line. As a matter of course, a position in which scattering occurs differs depending on the position of a target.

The wavelength-selectable light receiver 23 receives an incident light pulse beam and generates a light receiving signal for each of different wavelengths. Therefore, the wavelength-selectable light receiver 23 includes a wavelength separation mechanism that separates light pulse beams for each wavelength (each of the three wavelengths $\lambda1$, $\lambda2$, and $\lambda3$ in this case) and a plurality of wavelength corresponding light receivers each of which generates a light receiving pulse signal in accordance with a separated pulse beam. The wavelength separation mechanism separates light pulse beams using a multilayer thin film filter and also may separate light pulse beams using an optical diffraction grating or the like. Also, each of the plurality of wavelength corresponding light receivers is realized using a light receiving element having high response speed and is realized, for example, using an avalanche photodiode. However, the wavelength corresponding light receiver is not limited thereto, any light receiving element having a high response speed may be used, and more specifically, a PIN photodiode or the like may be used.

The control calculator 24 receives a signal generated in the multi-wavelength pulse light source 21 and related to a time at which each of a plurality of light pulse beams of different wavelengths is generated. The control calculator 24 detects a time between from generation of a light pulse beam to generation of light receiving signal which is generated in a certain time range after the generation of the light pulse beam and corresponds to the light pulse beam. By using the detected time, the control calculator 24 calculates a distance to a target in a scanning direction. The control calculator 24 is realized, for example, by an arithmetic circuit including a processor, a CPU, a DSP, or the like.

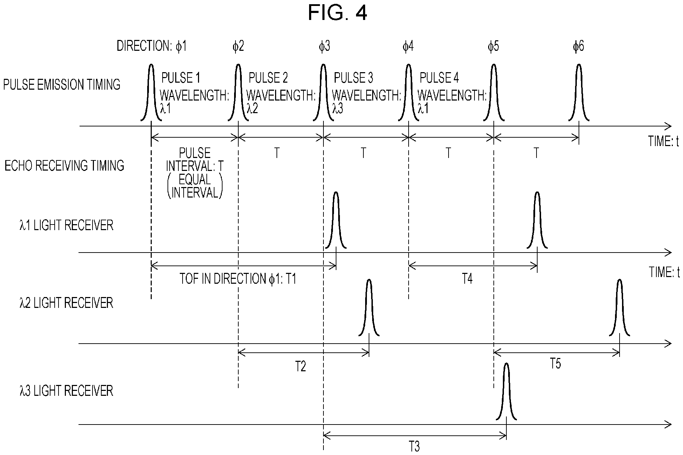

FIG. 4 is a time chart illustrating a light pulse emission timing and a light receiving timing in the optical distance measuring system 200.

As illustrated in FIG. 4, when the emission directions set by the scan device 22 are $\varphi1$, $\varphi2$, $\varphi3$, $\varphi4$, $\varphi5$, $\varphi6$, and so on, the light pulses 1, 2, 3, 4, 5, 6, and so on having wavelengths $\lambda1$, $\lambda2$, $\lambda3$, $\lambda1$, $\lambda2$, $\lambda3$, and so on respectively, are generated. In this case, the light pulses 1, 2, 3, 4, 5, 6, and so on are generated at equal pulse intervals T, as illustrated in 4. As for the pulse intervals T, in the case where Dmax is the maximum measurable distance of the optical distance measuring system 200 and light pulse beams of three different wavelengths are generated, the interval T is set to $2 \times Dmax/(N \times c)$ or more and $2 \times Dmax/c$ or less, where c is the speed of light.

An echo corresponding to the light pulse 1 emitted in the emission direction $\varphi1$ is received at TOF = T1 and the echo has the wavelength $\lambda1$, and therefore, a pulsed light receiving signal is generated by the light receiver for the wavelength $\lambda1$. Each of the light receivers of the wavelengths $\lambda2$ and $\lambda3$, however, does not generate a pulsed light receiving signal. Similarly, the echo corresponding to the light pulse 2 emitted in the emission direction $\varphi2$ is received at TOF = T2 and the echo has the wavelength $\lambda2$, and therefore, a pulsed light receiving signal is generated by the light receiver for the wavelength $\lambda2$ but each of the light receivers for the wavelengths $\lambda1$ and $\lambda3$ does not generate a light receiving signal. Similarly, the echo corresponding to the light pulse 3 emitted in the emission direction $\varphi3$ is received at TOF = T3 and the echo has the wavelength $\lambda3$, and therefore, a pulsed light receiving signal is generated by the light receiver for the wavelength $\lambda3$ but each of the light receivers for the wavelengths $\lambda1$ and $\lambda2$ does not generate a light receiving signal.

In FIG. 4, the light receiver for the wavelength $\lambda 1$ generates a light receiving signal of the light pulse having the wavelength $\lambda 1$ and does not generate a light receiving signal of each of the wavelengths $\lambda 2$ and $\lambda 3$. It may be presumed, accordingly, that the light receiver for the wavelengths $\lambda 1$ does not generate light pulses of the wavelengths $\lambda 2$ and $\lambda 3$. In other words, measurement is performed only by the generation of the light pulse of the wavelength $\lambda 1$ and the reception of light performed by the light receiver for the wavelength $\lambda 1$. The light pulses of the wavelength $\lambda 1$ are generated at a pulse interval of 3T, the pulse interval is $2 \times$ Dmax/c or more, and therefore, a distance to a target within the maximum measurable distance Dmax or less may be measured, as described above. This applies to a pair of the light pulse of the wavelength $\lambda 2$ and the light receiver for the wavelength $\lambda 2$ and a pair of the light pulse of the wavelength $\lambda 3$ and the light receiver for the wavelength $\lambda 3$.

In FIG. 4, the light pulses of three different wavelengths are successively emitted and the echoes related to the respective light pulses are individually received. Even in the case in which the echoes of the pulses reach the respective light receivers in almost same time or the order of reception of the echoes are switched, a distance may be measured correctly by associating the emission pulse with the corresponding light receiving signal. Therefore, as illustrated in FIG. 4, after light pulse is emitted to measure a distance in a direction, a next light pulse may be emitted for next measurement without waiting for the time $2 \times$ Dmax/c. That is, measuring time per direction may be reduced, and the frame rate may be increased to N times, where N is the number of kinds of different wavelengths used for the measurement, as compared to the laser ranging system 1000 illustrated in FIG. 1 and FIG. 2.

The control calculator 24 detects a time difference between a time of generation of a light pulse of a wavelength and a time of generation of a corresponding light receiving signal for each direction and calculates a distance to a target in each direction from the detected time difference in a similar way illustrated in FIG. 1 and FIG. 2.

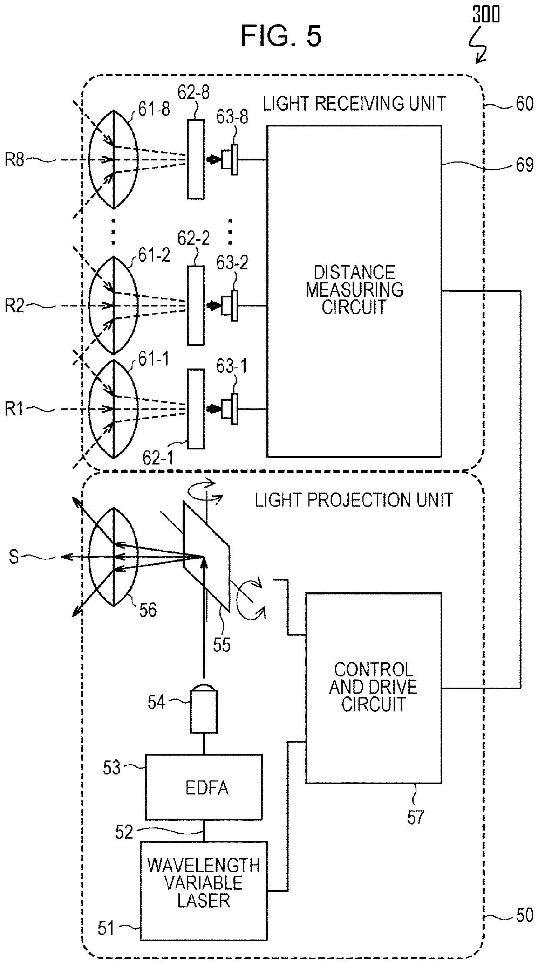

FIG. 5 is a diagram illustrating a configuration of a laser distance measuring device 300 according to a second embodiment. Note that the laser distance measuring device 300 may be considered as a laser radar device because of generating a distance image.

The laser distance measuring device 300 according to the second embodiment includes a light projection unit 50 that emits a light pulse beam and a light receiving unit 60 that receives scattered light or echo which is the light pulse beam reflected by a target. The light projection unit 50 includes a wavelength variable laser 51, a single mode optical fiber 52, an Er-doped optical fiber amplifier (EDFA) 53, a collimate lens 54, a two-dimensional MEMS scanner 55, a light projection lens 56, and a control and drive circuit 57. The light receiving unit 60 includes eight light receivers R1 to R8 each including the corresponding one of lenses 61-1 to 61-8, the corresponding one of dielectric multilayer filters 62-1 to 62-8, and the corresponding one of avalanche photodiodes (APD) 63-1 to 63-8 and a distance measuring circuit 69.

In the second embodiment, it is assumed that the maximum measurable distance Dmax is 30 m and the number of pixels of an acquired distance image is $640 \times 480$ pixels, which corresponds to VGA. In this case, TOF of a pulse in one direction is 200 ns at most. Then, in accordance with the above-described principle, in this embodiment, a time interval of a pulse stream emitted by a projector system is set to 30 ns, which is slightly larger than 200/8 = 25 ns. In this case, the frame rate is 108.5 fps and, for example, is high enough to capture a motion of a person who is playing sports. Also, it is assumed that the pulse width is 300 ps.

The wavelength variable laser 51 selectively generates pulses of eight wavelengths in a C band of the optical fiber communication, which are arranged at 1.6 nm intervals, centering around 1550 nm. Specifically, the wavelength variable laser 51 outputs a light pulse stream while cyclically changing the wavelength from one to another among eight wavelengths of $\lambda 1 = 1544.4$ nm, $\lambda 2 = 1546.0$ nm, $\lambda 3 = 1547.6$ nm, $\lambda 4 = 1549.2$ nm, $\lambda 5 = 1550.8$ nm, $\lambda 6 = 1552.4$ nm, $\lambda 7 = 1554.0$ nm, and $\lambda 8 = 1555.6$ nm. The wavelength variable laser 51 outputs a signal indicating an occurrence timing of the light pulse stream to the control and drive circuit 57. A detailed configuration of the wavelength variable laser 51 will be described later.

The single mode optical fiber 52 transmits the light pulse emitted by the wavelength variable laser 51 to the Er-doped optical fiber amplifier (EDFA) 53. The Er-doped optical fiber amplifier (EDFA) 53 amplifies the light pulse. The light pulse output by the EDFA 53 is transformed to a parallel light pulse by the collimate lens 54. The two-dimensional MEMS scanner 55 includes an MEMS mirror that rotates around two axes and causes a reflection direction to change such that a light pulse beam from the collimate lens 54 is two-dimensionally scanned. The two-dimensional MEMS scanner 55 outputs a signal indicating the rotation position of the MEMS scanner 55, that is, the emission (reflection) direction of the light pulse beam to the control and drive circuit 57. A light projection lens 56 causes a light pulse beam from the two-dimensional MEMS scanner 55 to be projected in beam form in a detection angle range. The detection angle range is, for example, $\pm 15$ degrees.

The lenses 61-1 to 61-8 condense scattered light or echo from a target within the detection angle range on light receiving surfaces of the avalanche photodiodes (APDs) 63-1 to 63-8 via the dielectric multilayer filters 62-1 to 62-8. The dielectric multilayer filters 62-1 to 62-8 each have a corresponding one of transmission wavelength band of $\pm 0.4$ nm centering around the corresponding one of the above-described eight wavelengths $\lambda 1$ to $\lambda 8$. By the dielectric multilayer filters 62-1 to 62-8, each of the light pulse beams having the corresponding one of the eight wavelengths λ1 to λ8 is obtained. The avalanche photodiodes (APDs) 63-1 to 63-8 are light receiving elements which have high speed response performance and each generate a light receiving pulse in accordance with the corresponding one of the light pulse beams of the eight wavelengths λ1 to λ8 transmitted through the dielectric multilayer film filters 62-1 to 62-8, respectively. Specifically, each of the APDs 63-1 to 63-8 includes InGaAs as an absorbing layer, is used in high-speed optical fiber communication at 10 Gb/s or more, and is capable of easily detecting a pulse having a pulse width of 300 ps. The distance measuring circuit 69 generates a distance image by calculating a distance to a target in each direction from a time difference based on a light pulse generation signal which indicates the time of generation of the light pulse from the control circuit 57 and a time at which a receiving signal of each of the avalanche photodiodes (APDs) 63-1 to 63-8 is generated.

In the second embodiment, the wavelength variable laser 51 is an element with integrated a wavelength variable laser and a mach-zehnder optical modulator which are formed on an InP substrate and may be usable in the optical fiber communication. There is used, as the wavelength variable laser, an element of a type that causes the refractive index of a waveguide to change by carrier injection. Such a wavelength variable laser is capable of performing wavelength switching at high speed and may perform the above-described wavelength switching at 30 ns intervals. Also, the mach-zehnder optical modulator of an InP system which is integrated with the wavelength variable laser is capable of performing a high speed operation at 10 Gb/s or more and may easily generate the above-described pulse of 300 ps.

The laser distance measuring device 300 according to the second embodiment has been described above but, needless to say, may be modified in various manners. For example, although a single wavelength variable laser is used in the second embodiment, a configuration in which, using eight fixed-wavelength electro absorption modulators integrated DFB lasers (EMLs) the oscillation wavelengths of which have been caused to match wavelength grids of λ1 to λ8 in advance, outputs from the EMLs are combined by a coupler and then are thus input to the EDFA may be employed. In this case, each of the EMLs performs an operation of repeatedly outputting a pulse having a width of 300 ps at a cycle of 1/240 ns = 4.1 MHz, and performs control in which the pulse emission timings of adjacent ones of the EMLs are shifted from each other by only 30 ns.

When the speed of measuring distance is desired to be further increased, there may be employed a configuration in which all of wavelength grids arranged at 0.8 nm intervals in the C band wavelength band of an optical fiber communication. In this case, the number of wavelengths is about forty, and forty pairs of light receivers are desirably used. The size of a system is, accordingly, increased, but the measuring speed may be increased. Furthermore, in this case, a configuration in which, using APDs on an array, micro-wavelengths filters of different transmission wavelength bands are bonded to each other on each of the APD may be employed.

All examples and conditional language provided herein are intended for the pedagogical purposes of aiding the reader in understanding the invention and the concepts contributed by the inventor to further the art, and are not to be construed as limitations to such specifically recited examples and conditions, nor does the organization of such examples in the specification relate to a showing of the superiority and inferiority of the invention. Although one or more embodiments of the present invention have been described in detail, it should be understood that the various changes, substitutions, and alterations could be made hereto.

In any of the above aspects, the various features may be implemented in hardware, or as software modules running on one or more processors. Features of one aspect may be applied to any of the other aspects.

The invention also provides a computer program or a computer program product for carrying out any of the methods described herein, and a computer readable medium having stored thereon a program for carrying out any of the methods described herein. A computer program embodying the invention may be stored on a computer-readable medium, or it could, for example, be in the form of a signal such as a downloadable data signal provided from an Internet website, or it could be in any other form.

## Claims

1. An optical distance measuring system comprising:

   a multi-wavelength pulse light source configured to generate a plurality of light pulses of different wavelengths and repeat a cycle in which the light pulse is generated while sequentially changing the wavelength thereof;
   a scan device configured to scan the light pulses;
   a wavelength-selectable light receiver configured to receive reflection light of the plurality of light pulses of difference wavelengths from a target and generate a light receiving signal that corresponds to each of the plurality of different wavelengths; and
   a processor configured to
   detect time from the generation of each of the plurality of light pulses of different wavelengths in the multi-wavelength pulse light source to the generation of the light receiving signal of a corresponding wavelength which is generated in predetermined time and calculate a distance to the target in a scanning direction from the detected time.

**2.** The optical distance measuring system according to claim 1,
wherein the multi-wavelength pulse light source includes a wavelength variable laser.

**3.** The optical distance measuring system according to claim 1 or 2,
wherein the wavelength-selectable light receiver includes
a plurality of light receiving elements, and
a plurality of thin film filters disposed in incident parts of the plurality of light receiving elements and configured to selectively pass the plurality of different wavelengths.

**4.** The optical distance measuring system according to any of claim 1 to 3,
wherein the scan device is a microelectromechanical Systems scanner.

**5.** The optical distance measuring system according to any of claim 1 to 4,
wherein when the maximum measurable distance of the optical distance measuring system is Dmax and the multi-wavelength pulse light source generates light pulses of different wavelengths of N types, the multi-wavelength pulse light source generates the light pulses at certain time intervals of 2*Dmax/(N*c) or more and 2*Dmax/c or less, where c is the velocity of light.

**6.** A light ranging method comprising:

repeating a cycle in which light pulses of difference wavelengths are sequentially generated;
scanning the light pulses;
receiving reflection light of the light pulses from a target and generating light receiving signals corresponding to the different wavelengths;
detecting time from the generation of each of the light pulses to the generation of the light receiving signal of a corresponding wavelength in predetermined time; and
calculating a distance to the target in a scanning direction from detected time.

# FIG. 1
# RELATED ART

# FIG. 2
# RELATED ART

DIRECTION: φ1       φ2       φ3

PULSE EMISSION TIMING

PULSE 1      PULSE 2      PULSE 3

TIME: t

PULSE INTERVAL: T      T

ECHO RECEIVING TIMING

PULSE 1      PULSE 2      PULSE 3

TIME: t

TOF IN
DIRECTION φ1: T1      T2      T3

FIG. 3

# FIG. 4

DIRECTION: φ1     φ2     φ3     φ4     φ5     φ6

PULSE EMISSION TIMING

PULSE 1 WAVELENGTH: λ1    PULSE 2 WAVELENGTH: λ2    PULSE 3 WAVELENGTH: λ3    PULSE 4 WAVELENGTH: λ1

TIME: t

ECHO RECEIVING TIMING

PULSE INTERVAL: T ( EQUAL INTERVAL )

T     T     T     T

λ1 LIGHT RECEIVER

TIME: t

TOF IN DIRECTION φ1: T1     T4

λ2 LIGHT RECEIVER

T2     T5

λ3 LIGHT RECEIVER

T3

# FIG. 5

300

LIGHT RECEIVING UNIT — 60

61-8
62-8
63-8

R8

61-2
62-2
63-2

R2

61-1
63-1

R1

62-1

DISTANCE
MEASURING
CIRCUIT

69

LIGHT PROJECTION UNIT

S

56

55

54

53
EDFA

52

CONTROL
AND DRIVE
CIRCUIT

57

WAVELENGTH
VARIABLE
LASER

51

50

12

Europäisches
Patentamt

European
Patent Office

Office européen
des brevets

# EUROPEAN SEARCH REPORT

Application Number

EP 17 15 8773

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2006/238742 A1 (HUNT JEFFREY H [US] ET AL) 26 October 2006 (2006-10-26) * paragraph [0022] - paragraph [0037]; figures 1-5 * | 1-6 | INV. G01S17/10 G01S17/42 G01S7/481 G01S7/484 |
| X | US 2013/050676 A1 (D ALIGNY AUGUSTE [FR]) 28 February 2013 (2013-02-28) * paragraph [0110] - paragraph [0112]; figures 14A-14C * | 1-6 | |
| X | US 2009/122295 A1 (EATON ROBERT B [US]) 14 May 2009 (2009-05-14) * paragraph [0016] - paragraph [0039]; figures 1,2,4 * | 1-6 | |
| A | US 5 206 697 A (SCHWARTZ WILLIAM C [US]) 27 April 1993 (1993-04-27) * column 4, line 44 - column 9, line 7 * | 1-6 | |

TECHNICAL FIELDS
SEARCHED      (IPC)

G01S

The present search report has been drawn up for all claims

| Place of search | Date of completion of the search | Examiner |
|---|---|---|
| Munich | 21 July 2017 | Fanjul Caudevilla, J |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 17 15 8773

This annex lists the patent family members relating to the patent documents cited in the above-mentioned European search report.
The members are as contained in the European Patent Office EDP file on
The European Patent Office is in no way liable for these particulars which are merely given for the purpose of information.

21-07-2017

| Patent document cited in search report | | | Publication date | Patent family member(s) | | | Publication date |
|---|---|---|---|---|---|---|---|
| US 2006238742 | A1 | | 26-10-2006 | NONE | | | |
| US 2013050676 | A1 | | 28-02-2013 | EP | 2766744 | A1 | 20-08-2014 |
| | | | | US | 2013050676 | A1 | 28-02-2013 |
| | | | | US | 2015309162 | A1 | 29-10-2015 |
| | | | | WO | 2013030651 | A1 | 07-03-2013 |
| US 2009122295 | A1 | | 14-05-2009 | AT | 489645 | T | 15-12-2010 |
| | | | | AU | 2006228080 | B1 | 29-03-2007 |
| | | | | CA | 2562620 | A1 | 07-09-2007 |
| | | | | CN | 101034155 | A | 12-09-2007 |
| | | | | EP | 1832897 | A1 | 12-09-2007 |
| | | | | EP | 2233947 | A2 | 29-09-2010 |
| | | | | JP | 5230858 | B2 | 10-07-2013 |
| | | | | JP | 2007240516 | A | 20-09-2007 |
| | | | | US | 2009122295 | A1 | 14-05-2009 |
| US 5206697 | A | | 27-04-1993 | NONE | | | |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2008292308 A
- JP 2000035479 A
- JP 2003149338 A